# EUROPEAN PATENT APPLICATION

(11) **EP 4 627 905 A1**
(43) Date of publication of application: **08.10.2025**
(21) Application number: 25156848.1
(22) Date of filing: 10.02.2025
(51) Int. Cl.: A01D 34/90

(54) **HANGING PLATE AND WORKING MACHINE**

(30) Priority: 04.04.2024 JP 2024060506
(71) Applicant: Yamabiko Corporation, Ohme-shi, Tokyo 198-8760 (JP)
(72) Inventor: MOMIYAMA, Hiroshi, Ohme-shi, Tokyo, 1988760 (JP); HIRAKAWA, Koji, Ohme-shi, Tokyo, 1988760 (JP); TAKEUCHI, Ken, Ohme-shi, Tokyo, 1988760 (JP)
(74) Representative: Winter, Brandl - Partnerschaft mbB

(57) **Abstract**

According to an aspect of the present disclosure, a hanging plate adapted to be attached to a working machine body and used to hang the working machine body by hooking a hook is provided. The hanging plate includes at least one elongated hole that penetrates the hanging plate in a thickness direction thereof and allows the insertion of an end portion of the hook. In the elongated hole, an opening area on a side closer to the working machine body is larger than an opening area on a side farther from the working machine body with an orthogonal line as a boundary. The orthogonal line passes through a midpoint of a longest line segment having a maximum length among line segments each connecting two points on a peripheral edge that defines an opening of the elongated hole, and it is orthogonal to the longest line segment.

## Description

### BACKGROUND

The present disclosure relates to a hanging plate and a working machine.

### RELATED ART

Conventionally, a brush cutter including a hanging plate attached to a brush cutter body is known (see US 5090839A). The hanging plate is used to hang a brush cutter body by hooking a hook connected to a harness worn on the body of an operator. When in use, the brush cutter is held at an angle, so that a cutting blade is horizontal to the ground (see JP 2019-062880A).

This hanging plate has a plurality of circular through holes formed therein. However, with through holes having such a shape, the end portion of the hook gets caught on the peripheral edge of the through hole of the hanging plate when removing the hook, thus making it difficult to remove the hook.

In view of the above circumstances, the present disclosure provides a hanging plate that enables smoother hook removal by an operator and a working machine including such a hanging plate.

According to an aspect of the present disclosure, a hanging plate is provided, which is adapted to be attached to a working machine body and used to hang the working machine body by hooking a hook. The hanging plate includes at least one elongated hole that penetrates the hanging plate in a thickness direction thereof and allows the insertion of an end portion of the hook. In the elongated hole, an opening area on a side closer to the working machine body is larger than an opening area on a side farther from the working machine body, with an orthogonal line as a boundary, that passes through a midpoint of a longest line segment having a maximum length among line segments each connecting two points on a peripheral edge that defines an opening of the elongated hole, and that is orthogonal to the longest line segment.

According to such an aspect, the operation of removing the hook can be performed more smoothly.

### BRIEF DESCRIPTION OF DRAWINGS

FIG. 1 is a perspective view of a brush cutter as an example of a working machine.
FIG. 2 is a perspective view of a hanging plate according to a first embodiment.
FIG. 3A is a side view of the hanging plate shown in FIG. 2 and FIG. 3B is a rear view of the hanging plate shown in FIG. 2.
FIG. 4 is a side view showing a state of the hanging plate when the brush cutter body is hung.
FIG. 5 is a schematic diagram showing a configuration of an elongated hole
FIG. 6 is a schematic diagram showing a state of the elongated hole when the brush cutter body is hung.
FIG. 7A and FIG. 7B are schematic diagrams showing other configurations and arrangements of the elongated hole.
FIG. 8A to FIG. 8C are schematic diagrams showing other shapes of the elongated hole.
FIG. 9 is a side view of a hanging plate according to a second embodiment.
FIG. 10 is a diagram for explaining a standing direction of the hanging plate.
FIG. 11 is a schematic diagram showing a configuration of an elongated hole.

### DETAILED DESCRIPTION

Hereinafter, an embodiment of the present disclosure will be described with reference to the drawings. Various features described in the embodiment below can be combined with each other.

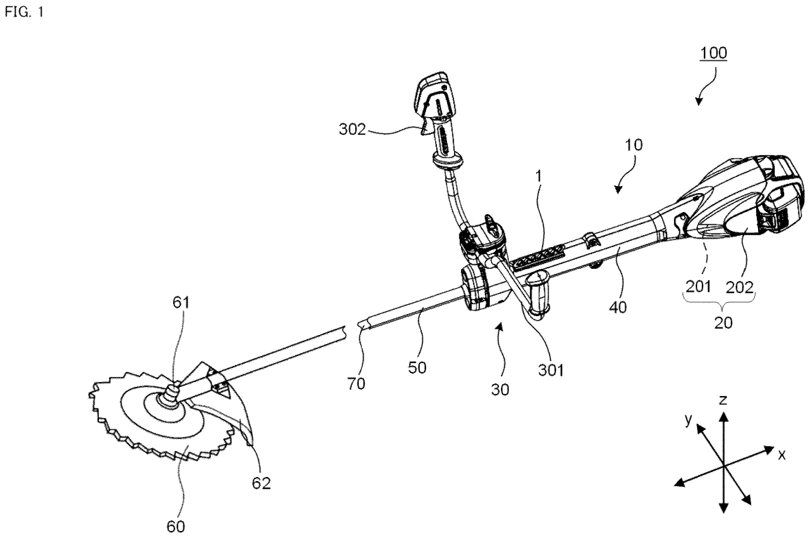

FIG. 1 is a perspective view of a brush cutter as an example of a working machine.

In the following description, directions are identified according to an x-axis, a y-axis, and a z-axis set as illustrated in each drawing. Thus, a positive side in the x-axis direction corresponds to a "tip side" and a negative side in the x-axis direction corresponds to a "base side".

A brush cutter (working machine) 100 shown in FIG. 1 includes a brush cutter body (working machine body) 10 and a hanging plate 1 attached to the brush cutter body 10.

A brush cutter body 10 includes a main body 20, an operation portion 30, a rotary blade 60, a pole 50 connecting the main body 20 and the rotary blade 60, and a rod portion (connecting portion) 40 provided on the outside of the pole 50 and connecting the main body 20 and the operation portion 30.

The main body 20 includes a driving device 201 and a casing 202 that houses the driving device 201. The driving device 201 may be configured by either an electric motor or an engine. The casing 202 can be made of, for example, a metal material, a resin material or the like.

The operation portion 30 is provided with a U-shaped handle 301 and a throttle lever 302, as shown in FIG. 1. An operator can rotate the rotary blade 60 by gripping the U-shaped handle 301 and operating the throttle lever 302, and mow objects such as grass and shrubs with the rotary blade 60.

The rod portion 40 has its base portion connected to the casing 202 of the main body 20, and the pole 50 is inserted inside the rod portion 40. The rod portion 40 and the pole 50 are each made of a tubular metal member or a tubular resin member, and a drive transmission shaft 70 is inserted into the pole 50.

The end portion of the drive transmission shaft 70 is connected to the rotary shaft 61 of the rotary blade 60. The base portion of the drive transmission shaft 70 is connected to an output shaft (not shown) of the driving device 201. The rotational driving force of the output shaft of the driving device 201 is transmitted to the rotary blade 60 via the drive transmission shaft 70. This allows the rotary blade 60 to rotate. The end of the pole 50 is provided with a fan-shaped cover 62 that covers the rotary blade 60. This cover 62 can prevent pieces of objects such as grass and trees that have been mowed from flying directly toward the operator.

In the case where an electric motor is used for a motor (driving device 201), the brush cutter body 10 incorporates a control board (not shown) that controls the actuation of the electric motor. The control board contains an arithmetic element and a storage element.

The arithmetic element is configured of, for instance, a CPU (Central Processing Unit), an MPU (Micro Processing Unit), or the like. The arithmetic element reads a predetermined program stored in the storage element to implement various functions related to the brush cutter body 10. That is, information processing by software stored in the storage element is performed by the arithmetic element.

Note that the arithmetic element is not limited to being singular, and a plurality of arithmetic elements may be provided for each function. A combination thereof may be applied as well.

The storage element stores various information as defined by the foregoing description. This may be implemented, for instance, as a storage device such an SSD (Solid State Drive) that stores various programs or the like related to the brush cutter body 10 that is executed by the arithmetic element, or as a memory such as RAM (Random Access Memory) that stores temporarily necessary information (argument, array, etc.) related to program operations.

In addition, the storage element stores various programs, variables, etc. related to the brush cutter body 10 executed by the arithmetic element.

A hanging plate 1 is attached to the rod portion (connecting portion) 40 of the brush cutter body (working machine body) 10 so as to protrude to the same side as the U-shaped handle 301 and the throttle lever 302.

### < First embodiment>

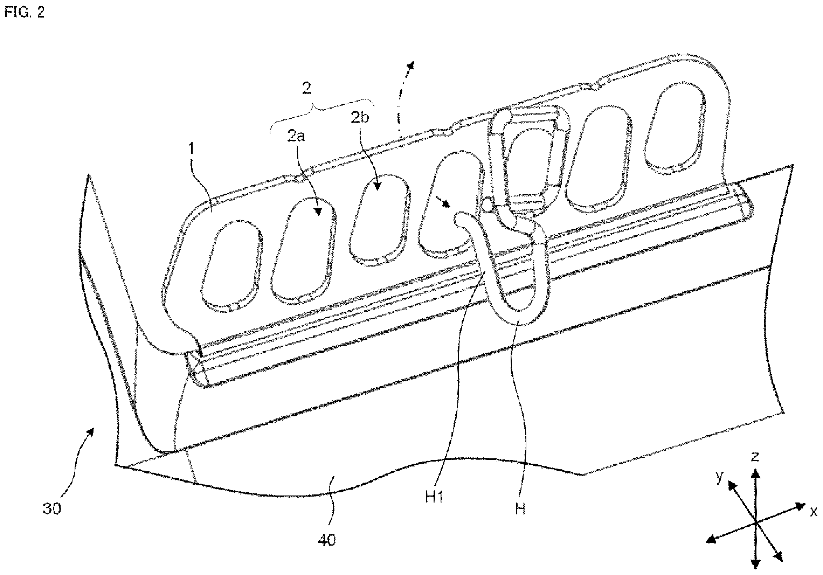

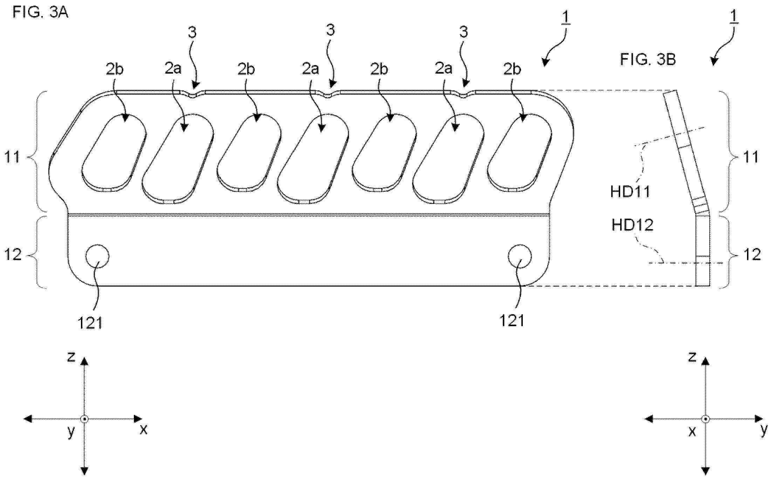

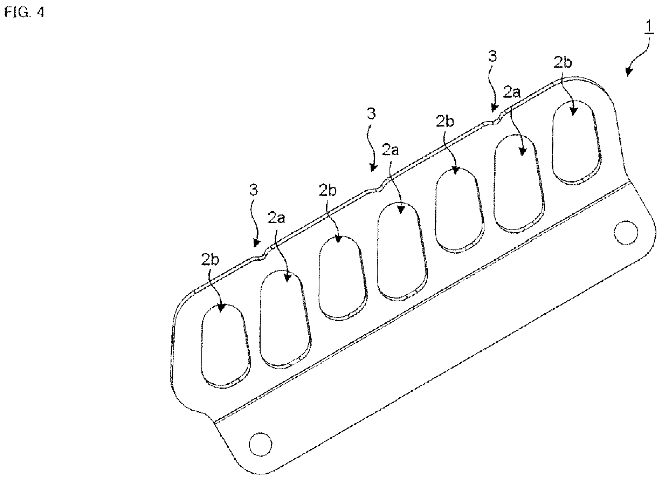

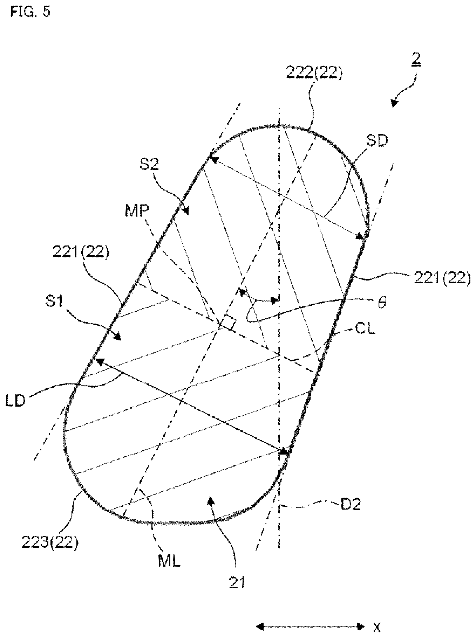

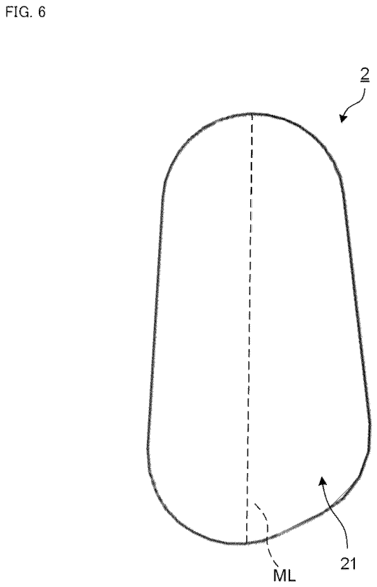

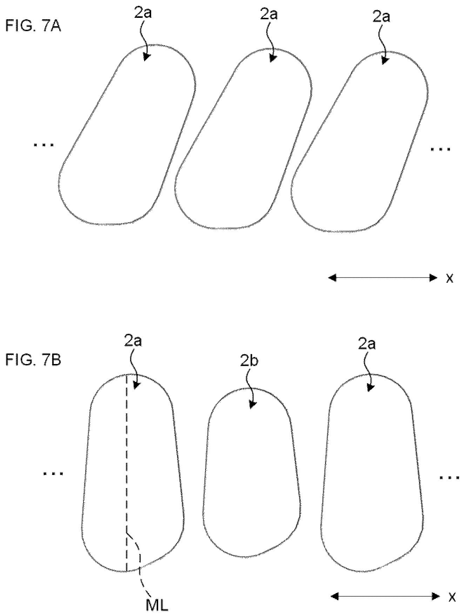

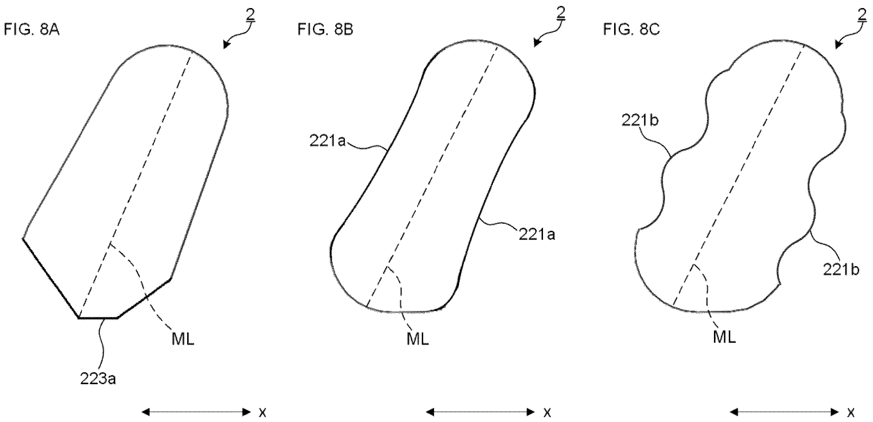

First, the hanging plate according to the first embodiment will be described. FIG. 2 is a perspective view of the hanging plate according to the first embodiment. FIG. 3A is a side view of the hanging plate shown in FIG. 2, and FIG. 3B is a rear view of the hanging plate shown in FIG. 2. FIG. 4 is a side view showing a state of the hanging plate when the brush cutter body is hung. FIG. 5 is a schematic diagram showing a configuration of an elongated hole. FIG. 6 is a schematic diagram showing a state of the elongated hole when the brush cutter body is hung. FIG. 7A and FIG. 7B are schematic diagrams showing other configurations and arrangements of the elongated hole. FIG. 8A to FIG. 8C are schematic diagrams showing other shapes of the elongated hole.

As shown in FIG. 2, the hanging plate 1 has an outer shape of a horizontally long rectangle, and it is used to hang the brush cutter body (working machine body) 10 by hooking a hook H. The hanging plate 1 shown in FIG. 2, FIG. 3A and FIG. 3B includes at least one elongated hole 2 (a plurality of elongated holes 2 in the present embodiment) that penetrates the hanging plate 1 in the thickness direction (y-axis direction) thereof and allows the insertion of an end portion H 1 of the hook H.

In the present embodiment, a plurality of elongated holes 2 includes elongated holes 2 having longest line segments ML (see FIG. 5, described in detail below) that are different in length. More specifically, the plurality of elongated holes 2 alternately includes a first elongated hole 2a, whose longest line segment ML has a first length, and a second elongated hole 2b, whose longest line segment ML has a second length that is shorter than the first length. With such a configuration, it becomes easier for the operator to distinguish the position of the first elongated hole 2a or the second elongated hole 2b, which the operator is familiar with.

In this specification, the direction in which a plurality of elongated holes 2 (the first elongated hole 2a and the second elongated hole 2b) is aligned is referred to as an arrangement direction. In the present embodiment, the arrangement direction of the plurality of elongated holes 2 is the longitudinal direction (x-axis direction) of the hanging plate 1. In this case, even if the brush cutter body 10 is hung by hooking the hook H to either of the first elongated hole 2a or the second elongated hole 2b, the brush cutter body 10 can be easily balanced in a front-back direction. Thus, the brush cutter 100 can be held stably.

The first elongated hole 2a and the second elongated hole 2b have the same configuration except that the lengths of their longest line segments ML are different, and thus they will be described below as an elongated hole 2.

As shown in FIG. 5, each elongated hole 2 has an ellipse-like shape.

Each elongated hole 2 satisfies a condition A in which an opening area S1 on the side closer to the brush cutter body 10 is larger than an opening area S2 on the side farther from the brush cutter body 10 with an orthogonal line CL as a boundary. The orthogonal line CL passes through the midpoint MP of the longest line segment ML having a maximum length among line segments each connecting two points on a peripheral edge 22 that defines an opening 21 of the elongated hole 2, and it is orthogonal to the longest line segment ML. By satisfying this condition A, it is possible to ensure a large amount of play between the peripheral edge 22 of each elongated hole 2 and the inserted hook H on the side closer to the brush cutter body 10 in each elongated hole 2. Thus, when the hook H is moved vertically downward in the operation of removing the hook H from the hanging plate 1, they are less likely to interfere with each other, so that the removing operation can be performed more smoothly.

The operation of removing the hook H from the hanging plate 1 is described in more detail below. There are cases where the removing operation is performed while the operator is still hanging the brush cutter body 10 (mainly after the work is completed) or where the removing operation is performed with the brush cutter body 10 placed on the ground (mainly at the time of starting work).

In the present embodiment, a large amount of play is ensured between the peripheral edge 22 of each elongated hole 2 and the inserted hook H on the side closer to the brush cutter body 10 in each elongated hole 2. Thus, either in a hung state (see FIG 4 and FIG. 6) or a placed state (see FIG. 3A, FIG. 3B and 5), the movable range of the hook H in the vertical direction (in the direction along the longest line segment ML in FIG. 6 and along D2 in FIG. 5) from the apex position of a distal part 222 to the opposing position of a proximal part 223 is sufficiently maintained. Accordingly, the hook H can be easily attached to and detached from the hanging plate 1 without changing the posture of the brush cutter body 10 or temporarily putting the brush cutter body 10 down.

The ratio of the opening area S2 to the opening area S1 (S2/S1) is not particularly limited, but the ratio is preferably about 1.1 or more and 2 or less, more preferably about 1.2 or more and 1.8 or less, and even more preferably about 1.3 or more and 1.6 or less.

Specifically, as shown in FIG. 5, each elongated hole 2 includes a pair of straight parts 221 facing each other through the longest line segment ML. The distance between the pair of straight parts 221 becomes larger from the side farther from the brush cutter body 10 to the side closer to the brush cutter body 10. In this case, it is possible to form the elongated hole 2 having the opening areas S1 and S2 satisfying the above-mentioned relationship with a relatively simple configuration. Thus, the workability of the elongated hole 2 in the hanging plate 1 can be improved.

The ratio of the maximum distance LD to the minimum distance SD between the pair of straight parts 221 (LD/SD ratio) is preferably about 1.1 or more and 1.7 or less, more preferably about 1.15 or more and 1.5 or less, and even more preferably about 1.2 or more and 1.3 or less. In this case, the size of each elongated hole 2 can be prevented from becoming too large, and the above-mentioned effects can be further improved.

Here, a specific value of the minimum distance SD is preferably about 5 mm or more and 15 mm or less, more preferably about 7 mm or more and 13 mm or less, and even more preferably about 9 mm or more and 11 mm or less.

A specific value of the maximum distance LD is preferably about 7 mm or more and 17 mm or less, more preferably about 9 mm or more and 15 mm or less, and even more preferably about 11 mm or more and 13 mm or less.

In addition, each elongated hole 2 includes a distal part 222 connecting the ends of the pair of straight parts 221 on the side farther from the brush cutter body 10 and a proximal part 223 connecting the ends of the pair of straight parts 221 on the side closer to the brush cutter body 10. At least the distal part 222 preferably has a shape including an arc. In the present embodiment, the distal part 222 has an arc shape as a whole, and the proximal part 223 has such a shape in which two arcs are connected by a straight line.

By providing the distal part 222 with a shape including an arc, the hook H will be positioned at the center of the arc-shaped part when the brush cutter body 10 is hung by hooking the hook H to each elongated hole 2. At this time, the hook H and the hanging plate 1 are in a state close to point contact. Thus, even if the brush cutter body 10 swings in the front-back direction (x-axis direction), it moves with the hook H as a fulcrum, making it more stable.

The longest line segment ML of each elongated hole 2 is inclined relative to the longitudinal direction of the hanging plate 1, i.e., the arrangement direction (x-axis direction) of the plurality of elongated holes 2. When the brush cutter body 10 is hung by hooking the hook H to one of the elongated holes 2, the longest line segment ML of each elongated hole 2 is aligned vertically with the ground. Specifically, as in the present embodiment, in the case where the distal part 222 of each elongated hole 2 is inclined toward the base side (the main body 20 side) of the brush cutter body 10, the brush cutter body 10 tends to tilt so that the rotary blade 60 is on the lower side when it is hung.
As a result, the operator can easily attach or detach the hook H without changing the posture of the brush cutter body 10 even in a state where the operator is hanging it.

The angle θ between the longest line segment ML of each elongated hole 2 and the direction D2 orthogonal to the longitudinal direction (x-axis direction) and the thickness direction of the hanging plate 1 is preferably about 10° or more and 40° or less, more preferably about 15° or more and 35° or less, and even more preferably about 20° or more and 30° or less. In this case, the above-mentioned effects can be further improved.

It is preferable that some of the elongated holes 2 are arranged so as to be displaced in a direction orthogonal to the longitudinal direction (x-axis direction) and the thickness direction of the hanging plate 1, that is, in the lateral direction of the hanging plate 1. In the present embodiment, as shown in FIG. 2 and FIG. 3A, the first elongated hole 2a and the second elongated hole 2b, which are arranged alternately, are arranged such that their distal parts 222 are aligned with each other while their proximal parts 223 are displaced from each other.

This configuration also makes it easier for the operator to distinguish the position of the first elongated hole 2a or the second elongated hole 2b, which the operator is familiar with. Furthermore, with such a configuration, the first elongated hole 2a and the second elongated hole 2b can be arranged closer to each other compared to the case where the first elongated holes 2a are uniformly arranged and the distance between the first elongated holes 2a is the same as in the present embodiment. Consequently, the length of the hanging plate 1 in the longitudinal direction can also be designed to be smaller.

As shown in FIG. 3A and FIG. 3B, the hanging plate 1 includes a main body portion 11 having a plurality of elongated holes 2 and a fixing portion 12 that is connected to the main body portion 11 and is fixed to the brush cutter body 10. The fixing portion 12 includes two through holes 121 formed so as to penetrate along its thickness direction (y-axis direction). Each through hole 121 can accommodate a fixing member (e.g., a bolt, etc.) for fixing the hanging plate 1 to the brush cutter body 10.

As shown in FIG. 3B, a thickness direction HD 11 of the main body portion 11 and a thickness direction HD 12 of the fixing portion 12 intersect with each other. That is, the hanging plate 1 is bent or curved in the middle in its lateral direction (height direction). This makes it easier to see the plurality of elongated holes 2 from vertically above (in the z-axis direction). The angle between the thickness direction HD11 and the thickness direction HD12 is not particularly limited, but the angle is preferably about 5° or more and 15° or less.

Furthermore, as shown in FIG. 3A, notches 3 are provided at predetermined intervals along the long side (end surface) of the hanging plate 1 on a side opposite to the brush cutter body 10 in the hanging plate 1. In the present embodiment, each of the notches 3 is provided corresponding to the first elongated hole 2a. By providing such notches 3, it becomes easier for the operator to distinguish the position of the first elongated hole 2a or the second elongated hole 2b, which the operator is familiar with.

That is, each of the notches 3 functions as a marker indicating the position of a particular one of the first elongated hole 2a or the second elongated hole 2b. Markers with such a function may include not only the notch 3 but also a plurality of protrusions, ribs, stickers, colored portions, or combinations thereof.

Such a hanging plate 1 is attached to the operation portion 30 side in the rod portion (connecting portion) 40 of the brush cutter body (working machine body) 10. In this case, even if the brush cutter body 10 is hung by hooking the hook H to either of the elongated hole 2a or the second elongated hole 2b, the brush cutter body 10 can be hung at a position closer to its center of gravity. This makes it easier to hold the brush cutter 100 more stably.

In the above embodiment, the plurality of elongated holes 2 alternately includes the first elongated holes 2a and the second elongated holes 2b having different lengths of the longest line segments ML, and these elongated holes are displaced in the lateral direction that is orthogonal to the longitudinal direction (arrangement direction) and the thickness direction. However, other arrangements are also possible. FIG. 7A and FIG. 7B are side views showing other configurations and arrangements of the elongated holes.

In the example shown in FIG. 7A, the lengths of the longest line segments ML of all the elongated holes 2 are the same. In other words, all the elongated holes 2 are identical to the first elongated holes 2a. The example shown in FIG. 7A also provides the same actions and effects as the example shown in FIG. 3A or the like. However, as described above, according to the example shown in FIG. 3A or the like, it becomes easier for the operator to distinguish the position of the first elongated hole 2a or the second elongated hole 2b, which the operator is familiar with.

In the example shown in FIG. 7B, the plurality of elongated holes 2 alternately includes the first elongated hole 2a and the second elongated hole 2b, and their longest line segments ML are substantially orthogonal to the longitudinal direction (x-axis direction) of the hanging plate 1 without being inclined. However, according to the example shown in FIG. 3A as described above, for example, the brush cutter body 10 is easily tilted so that the rotary blade 60 is on the lower side when it is hung. This can enhance the operability of the mowing by the brush cutter 100.

In the case where the plurality of elongated holes 2 includes elongated holes 2 having different lengths for their longest line segments ML, one or more types of elongated holes having a length different from the lengths of the longest line segments ML of the first elongated hole 2a and the second elongated hole 2b may be included in addition to them. The longest line segments ML of these elongated holes 2 may or may not be inclined relative to the longitudinal direction (x-axis direction) of the hanging plate 1. In addition, in the case where the plurality of elongated holes 2 includes an elongated hole 2 whose longest line segment ML has a different length, only one of the elongated holes 2 may have a longest line segment ML whose length is different.

Such a hanging plate 1 can be made of, for example, a metal material, a ceramic material, a hard resin material, or the like.

The hook H may be provided at the end portion of a shoulder strap worn by an operator, or at the lower end of a vest worn by the operator.

The shape of the elongated hole 2 is not limited to that shown in FIG. 5. The shape of the elongated hole 2 may also be a shape as shown in FIG. 8A to FIG. 8C.

FIG. 8A to FIG. 8C are side views showing other shapes of elongated holes. In the example shown in FIG. 8A, the proximal part 223a of the elongated hole 2 forms a bent line as if three line segments have been connected together. In the example shown in FIG. 8B, the opposing portions through the longest line segment ML include (arc-shaped) curved parts 221a that are curved so as to project inwardly.

In the example shown in FIG. 8C, the opposing portions through the longest line segment ML include wavy curved parts 221b.

### <Second embodiment>

Next, a hanging plate according to the second embodiment will be described.

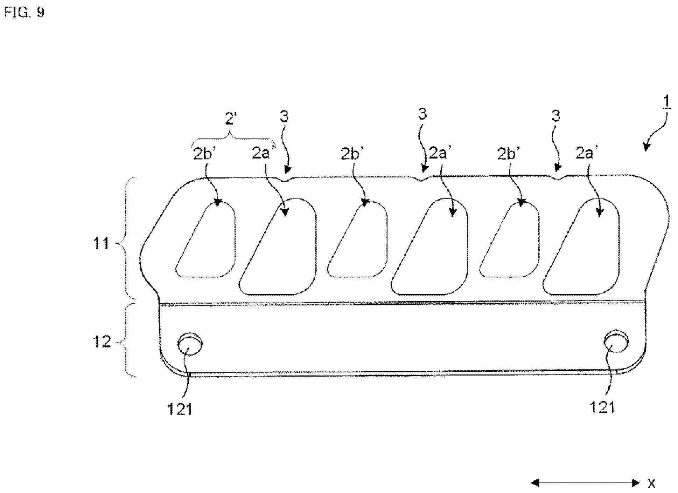

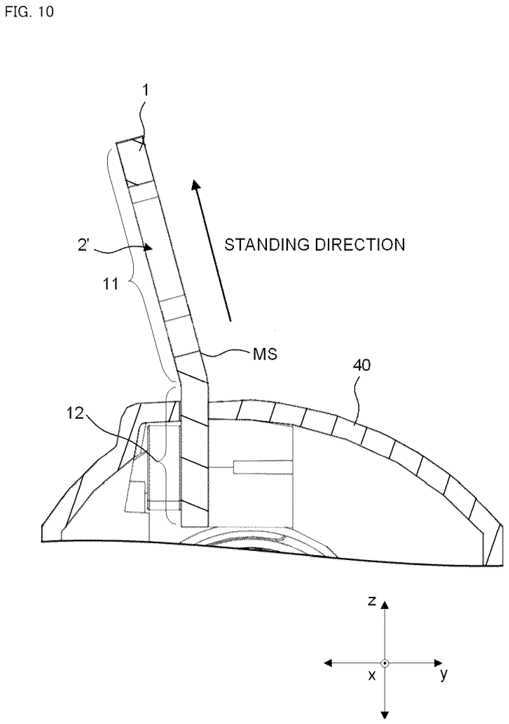

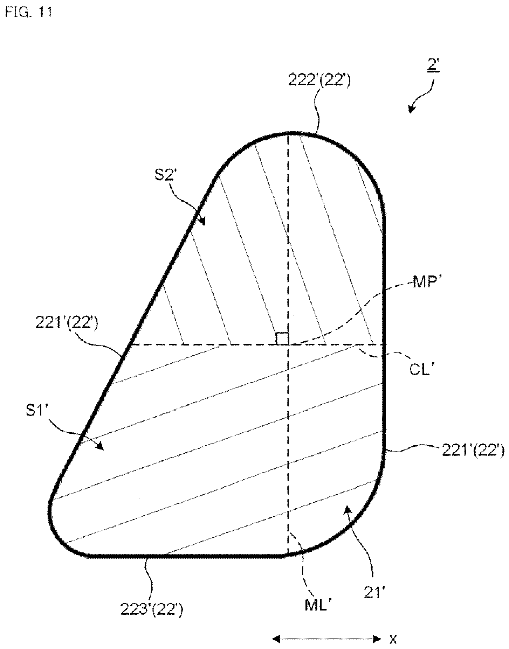

FIG. 9 is a side view of a hanging plate according to the second embodiment. FIG. 10 is a diagram for explaining a standing direction of the hanging plate. FIG. 11 is a schematic diagram showing a configuration of an elongated hole.

Hereinafter, the hanging plate according to the second embodiment will be described. The description will be mainly given of differences from the hanging plate according to the first embodiment, and the description of similar matters will be omitted. The hanging plate 1 according to the second embodiment is mainly the same as the hanging plate 1 according to the first embodiment described above, except that the shape of the elongated hole is different.

As shown in FIG. 9, the hanging plate 1 of the second embodiment also includes a main body portion 11 having a plurality of elongated holes 2', and a fixing portion 12 that is connected to the main body portion 11 and is fixed to the brush cutter body 10, in the same manner as the hanging plate 1 of the first embodiment described above.

The fixing portion 12 includes two through holes 121 formed so as to penetrate along its thickness direction (y-axis direction). A fixing member (e.g., a bolt, etc.) for fixing the hanging plate 1' to the brush cutter body 10 can be inserted through each through hole 121.

Furthermore, the hanging plate 1 is bent or curved in the middle in its lateral direction (height direction).

Furthermore, notches 3' are provided at predetermined intervals along the long side (end surface) of the hanging plate 1 on a side opposite to the brush cutter body 10 in the hanging plate 1.

The plurality of elongated holes 2' alternately includes a first elongated hole 2a' whose longest line segment ML' (described later) has a first length, and a second elongated hole 2b' whose longest line segment ML' has a second length that is shorter than the first length. As shown in FIG. 9, each of the elongated holes 2' has a shape like a right triangle with rounded apexes.

Specifically, as shown in FIG. 11, each of the elongated holes 2' includes a pair of straight parts 221' opposite each other through the longest line segment ML', a distal part 222' connecting the ends of the pair of straight parts 221' on the side farther from the brush cutter body 10, and a proximal part 223' connecting the ends of the pair of straight parts 221' on the side closer to the brush cutter body 10. In the present embodiment, the distal part 222' has an arc shape as a whole, and the proximal part 223' has such a shape in which two arcs are connected by a straight line.

Referring to FIG. 11, each elongated hole 2' satisfies a condition B in which an opening area S1' on the side closer to the brush cutter body 10 is larger than an opening area S2' on the side farther from the brush cutter body 10 with an orthogonal line CL' as a boundary. The orthogonal line CL' passes through the midpoint MP' of the longest line segment ML' having a maximum length in a standing direction of the hanging plate 1 among line segments each connecting two points on a peripheral edge 22' that defines an opening 21' of the elongated hole 2'. Also, the orthogonal line CL is orthogonal to the standing direction. By satisfying this condition B, it is possible to ensure a large amount of play between the peripheral edge 22' of each elongated hole 2' and the inserted hook H on the side closer to the brush cutter body 10 in each elongated hole 2'. Thus, when the hook H is removed from the hanging plate 1, these are less likely to interfere with each other, so that the removing operation can be performed more smoothly.

Here, the standing direction of the hanging plate 1 refers to a direction away from the brush cutter body 10 and along the main surface MS of the hanging plate 1 as shown in FIG. 10. Thus, the standing direction of the hanging plate 1 (main body portion 11) is slightly inclined relative to the z-axis direction. In the case where the hanging plate 1 is not bent or curved in the middle in its lateral direction (height direction), the standing direction thereof is substantially along the z-axis direction.

The ratio of the opening area S2' to the opening area S1' (S2'/S1') is not particularly limited, but the ratio is preferably about 1.1 or more and 2 or less, more preferably about 1.2 or more and 1.8 or less, and even more preferably about 1.3 or more and 1.6 or less.

The second embodiment also provides the same actions and effects as those of the first embodiment described above.

In the above embodiment, the number of elongated holes 2 arranged in the hanging plate 1 was six or seven, but it is not limited thereto. The number may be one, two or more and five or less, or eight or more. That is, the hanging plate 1 may include at least one elongated hole 2.

In addition, at least one elongated hole 2 may satisfy both the above conditions A and B. Furthermore, in the case where the hanging plate includes a plurality of elongated holes 2, some of the elongated holes 2 may satisfy both the above conditions A and B, and the remaining elongated holes 2 may satisfy only one of the above conditions A and B.

In the above embodiment, a brush cutter configured to mow objects has been described as a representative working machine, but the working machine is not limited to it and may be, for example, a ground hedge, an edger, a ground trimmer, or the like.

Furthermore, the present disclosure may be provided in each of the following aspects.
(1) A hanging plate adapted to be attached to a working machine body and used to hang the working machine body by hooking a hook, the hanging plate comprising: at least one elongated hole that penetrates the hanging plate in a thickness direction thereof and allows the insertion of an end portion of the hook, in the elongated hole, an opening area on a side closer to the working machine body being larger than an opening area on a side farther from the working machine body, with an orthogonal line as a boundary, that passes through a midpoint of a longest line segment having a maximum length among line segments each connecting two points on a peripheral edge that defines an opening of the elongated hole, and that is orthogonal to the longest line segment.
(2) The hanging plate according to (1), wherein: the elongated hole includes a pair of straight parts opposite each other through the longest line segment, and a distance between the pair of straight parts becomes larger from the side farther from the working machine body to the side closer to the working machine body.
(3) The hanging plate according to (2), wherein: a ratio of a maximum distance to a minimum distance between the pair of straight parts is 1.1 or more and 1.7 or less.
(4) The hanging plate according to (2) or (3), wherein: the elongated hole includes a distal part connecting ends of the pair of straight parts on the side farther from the working machine body, and a proximal part connecting ends of the pair of straight parts on the side closer to the working machine body, and at least the distal part has a shape including an arc.
(5) The hanging plate according to any one of (1) to (4), wherein: the longest line segment of the elongated hole is inclined relative to a longitudinal direction of the hanging plate.
(6) The hanging plate according to (5), wherein: an angle between the longest line segment of the elongated hole and a direction orthogonal to the longitudinal direction and the thickness direction is 10° or more and 40° or less.
(7) The hanging plate according to any one of (1) to (6), wherein: the at least one elongated hole includes a plurality of the elongated holes.
(8) The hanging plate according to (7), wherein: an arrangement direction of the plurality of the elongated holes is a longitudinal direction of the hanging plate.
(9) The hanging plate according to (7) or (8), wherein: the lengths of the longest line segments of all the elongated holes are the same.
(10) The hanging plate according to (9), wherein: the plurality of the elongated holes includes the elongated hole having the longest line segment that is different in length.
(11) The hanging plate according to (10), wherein: the plurality of the elongated holes alternately includes a first elongated hole whose longest line segment has a first length, and a second elongated hole whose longest line segment has a second length that is shorter than the first length.
(12) The hanging plate according to (10) or (11), wherein: some of the elongated holes are arranged so as to be displaced in a direction orthogonal to a longitudinal direction and the thickness direction of the hanging plate.
(13) The hanging plate according to any one of (1) to (12), wherein: the hanging plate includes a main body portion having the elongated hole, and a fixing portion that is connected to the main body portion and is fixed to the working machine body, and a thickness direction of the main body portion and a thickness direction of the fixing portion intersect with each other.
(14) A hanging plate adapted to be attached to a working machine body and used to hang the working machine body by hooking a hook, the hanging plate comprising: at least one elongated hole that penetrates the hanging plate in a thickness direction thereof and allows the insertion of an end portion of the hook, in the elongated hole, an opening area on a side closer to the working machine body being larger than an opening area on a side farther from the working machine body, with an orthogonal line as a boundary, that passes through a midpoint of a longest line segment having a maximum length in a standing direction of the hanging plate among line segments each connecting two points on a peripheral edge that defines an opening of the elongated hole, and that is orthogonal to the standing direction.
(15) A working machine, comprising: a working machine body; and the hanging plate according to any one of (1) to (14), the working machine body including a main body, an operation portion, and a connecting portion that connects the main body and the operation portion, the hanging plate being attached to the connecting portion.
(16) The working machine according to (15), wherein: the hanging plate is attached to a side of the operation portion in the connecting portion.
(17) The working machine according to (15) or (16), wherein: the working machine is a brush cutter configured to mow an object.

Of course, the present disclosure is not limited thereto.

As described above, various embodiments of the present disclosure have been described, but these are presented as examples and are not intended at all to limit the scope of the disclosure. Novel embodiments can be implemented in various other forms, and various omissions, replacements, and modifications can be made within the scope of the spirit of the disclosure. The embodiments and its modifications are included in the scope and the spirit of the disclosure and are included in the scope of the disclosure described in claims and the equivalent scope thereof.

For example, the hanging plate and the working machine may be appropriately combined with any of the configurations of the above embodiments.

## Claims

1. A hanging plate adapted to be attached to a working machine body and used to hang the working machine body by hooking a hook, the hanging plate comprising:
at least one elongated hole that penetrates the hanging plate in a thickness direction thereof and allows the insertion of an end portion of the hook,
in the elongated hole, an opening area on a side closer to the working machine body being larger than an opening area on a side farther from the working machine body, with an orthogonal line as a boundary, that passes through a midpoint of a longest line segment having a maximum length among line segments each connecting two points on a peripheral edge that defines an opening of the elongated hole, and that is orthogonal to the longest line segment.

2. The hanging plate according to claim 1, wherein:
the elongated hole includes a pair of straight parts opposite each other through the longest line segment, and
a distance between the pair of straight parts becomes larger from the side farther from the working machine body to the side closer to the working machine body.

3. The hanging plate according to claim 2, wherein:
a ratio of a maximum distance to a minimum distance between the pair of straight parts is 1.1 or more and 1.7 or less.

4. The hanging plate according to claim 2 or 3, wherein:
the elongated hole includes a distal part connecting ends of the pair of straight parts on the side farther from the working machine body, and a proximal part connecting ends of the pair of straight parts on the side closer to the working machine body, and
at least the distal part has a shape including an arc.

5. The hanging plate according to any one of claims 1 to 4, wherein:
the longest line segment of the elongated hole is inclined relative to a longitudinal direction of the hanging plate.

6. The hanging plate according to claim 5, wherein:
an angle between the longest line segment of the elongated hole and a direction orthogonal to the longitudinal direction and the thickness direction is 10° or more and 40° or less.

7. The hanging plate according to any one of claims 1 to 6, wherein:
the at least one elongated hole includes a plurality of the elongated holes.

8. The hanging plate according to claim 7, wherein:
an arrangement direction of the plurality of the elongated holes is a longitudinal direction of the hanging plate.

9. The hanging plate according to claim 7 or 8, wherein:
the lengths of the longest line segments of all the elongated holes are the same.

10. The hanging plate according to claim 9, wherein:
the plurality of the elongated holes includes the elongated hole having the longest line segment that is different in length.

11. The hanging plate according to claim 10, wherein:
the plurality of the elongated holes alternately includes a first elongated hole whose longest line segment has a first length, and a second elongated hole whose longest line segment has a second length that is shorter than the first length.

12. The hanging plate according to claim 10 or 11, wherein:
some of the elongated holes are arranged so as to be displaced in a direction orthogonal to a longitudinal direction and the thickness direction of the hanging plate.

13. The hanging plate according to any one of claims 1 to 12, wherein:
the hanging plate includes a main body portion having the elongated hole, and a fixing portion that is connected to the main body portion and is fixed to the working machine body, and
a thickness direction of the main body portion and a thickness direction of the fixing portion intersect with each other.

14. A hanging plate adapted to be attached to a working machine body and used to hang the working machine body by hooking a hook, the hanging plate comprising:
at least one elongated hole that penetrates the hanging plate in a thickness direction thereof and allows the insertion of an end portion of the hook,
in the elongated hole, an opening area on a side closer to the working machine body being larger than an opening area on a side farther from the working machine body, with an orthogonal line as a boundary, that passes through a midpoint of a longest line segment having a maximum length in a standing direction of the hanging plate among line segments each connecting two points on a peripheral edge that defines an opening of the elongated hole, and that is orthogonal to the standing direction.

15. A working machine, comprising:
a working machine body; and
the hanging plate according to any one of claims 1 to 14,
the working machine body including a main body, an operation portion, and a connecting portion that connects the main body and the operation portion,
the hanging plate being attached to the connecting portion.

16. The working machine according to claim 15, wherein:
the hanging plate is attached to a side of the operation portion in the connecting portion.

17. The working machine according to claim 15 or 16, wherein:
the working machine is a brush cutter configured to mow an object.
